Europäisches Patentamt

(19) European Patent Office

Office Européen des brevets

(11) Publication number: **0 271 248 B1**

(12) **EUROPEAN PATENT SPECIFICATION**

(45) Date of publication of patent specification :
02.01.91 Bulletin 91/01

(51) Int. Cl.⁵ : **F16L 5/02, H02G 3/22**

(21) Application number : 87310348.5

(22) Date of filing : 24.11.87

(54) Fire-restraining barrier for the penetration of conduits through a wall opening.

(30) Priority : 09.12.86 DE 3641914

(43) Date of publication of application :
15.06.88 Bulletin 88/24

(45) Publication of the grant of the patent :
02.01.91 Bulletin 91/01

(84) Designated Contracting States :
BE FR GB IT NL

(56) References cited :
WO-A-80/02086
CH-A- 575 671
DE-A- 2 614 893
DE-A- 3 446 503
US-A- 4 304 079
US-A- 4 419 535

(73) Proprietor : MINNESOTA MINING AND
MANUFACTURING COMPANY
3M Center, P.O. Box 33427
St. Paul, Minnesota 55133-3427 (US)

(72) Inventor : Goebell, Kurt Hans Juergen
Minnesota Mining and
Manufacturing Co. 2501 Hudson Road PO Box
33427
St. Paul Minnesota 55133-3427 (US)
Inventor : Schmitz, Michael c/o Minnesota
Mining and
Manufacturing Co. 2501 Hudson Road PO Box
33427
St. Paul Minnesota 55133-3427 (US)

(74) Representative : Baillie, Iain Cameron et al
c/o Ladas & Parry Isartorplatz 5
D-8000 München 2 (DE)

# Description

## Background of the Invention

The present invention relates to a fire-restraining barrier for the penetration of conduits through a wall opening, as described in the preamble of claim 1.

In known barriers of the kind indicated, for example, in US-A-4,364,210, difficulties arise if there are wall openings of a large size, and/or numerous and/or heavy conduits. Then, a relatively large and/or strongly structurized enclosure body must be used, and it is then difficult to ensure sufficient strength of the enclosure body. Also, it is difficult to manufacture and handle large enclosure bodies which consist at least partly of fire protection material.

A further example of a fire restraining barrier for the penetration of conduits is described in US-A-4 419 535.

It comprises a housing for lining an opening in a wall and a plurality of individually removable vertically extending partitions dividing the housing into a plurality of compartments. Each removable partition is in the form of a tray comprising an upstanding wall with an upper horizontally extending wall and a lower horizontally extending wall so as to define an U-shaped channel. When these partitions are inserted in side-by-side array in the housing, the upstanding wall of one partition acts as the closing wall of the three walls of the other partition so as to define a four sided compartment through which conduits can be inserted one on top of the other. By arranging two of the partitions such that the U-shapes face each other a four-sided compartment is obtained that is twice the width of the others. There is a lining of intumescent material on the walls of each of said compartments for expanding into and sealing each of said compartments in response to a fire. There is also a non-flammable insert for filling any of said compartments, or portions thereof, that are not filled with cables. Also provided are sealing means forming a seal between the walls of each compartment and any cables therein, said sealing means being located at at least one of the open ends of each compartment, to limit the transmission of smoke through said compartments prior to expansion of said intumescent material.

## Summary of the Invention

The present invention provides a fire-restraining barrier which is suitable for large wall openings, which can be easily manufactured and handled, and which can be easily adapted to wall openings of different sizes. The fire-restraining barrier according to the present invention comprises all the features as described in the characterising portion of claim 1.

In the barrier according to the invention, a grid forms a modular scaffold which can readily be designed with the necessary high strength, and the dimensions of the enclosure bodies need only correspond to those of the insertion channels formed by the grid. The grid can be easily manufactured and handled; particularly, it is also possible that the grid is built together, or preferably plugged together, from plates at the site of application, whereby the dimensions required in an individual case can be conveniently attained by cutting the plates to size, and a space-saving storing of grids is possible in the disassembled state. The relatively small individual enclosure bodies can be, independently of each other, adapted to the type of conduit desired. They can comprise substantially or totally of fire protection material of relatively low strength because they need not contribute an essential part of the strength of the overall barrier.

The barrier according to the invention is suited for all kinds of conduits, for instance electrical control or power lines, fluid lines, etc.

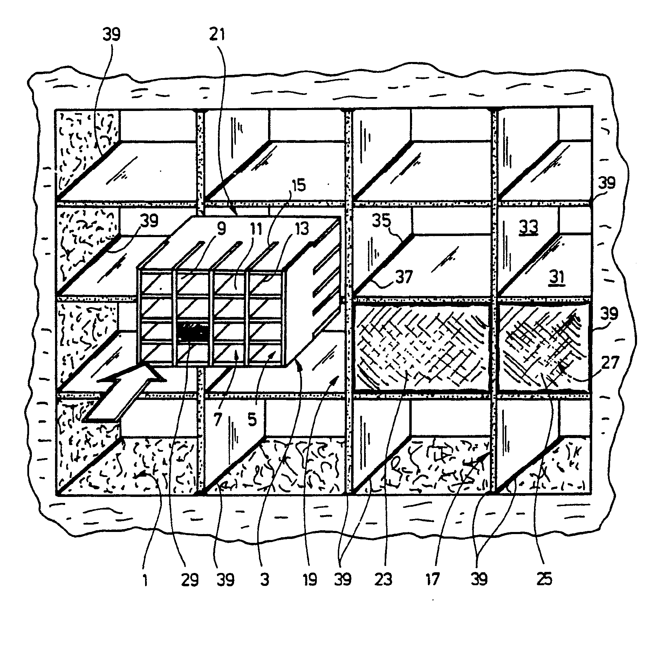

## The Drawing

The invention will be subsequently described by means of an embodiment example in connection with the drawing.

The sole Figure of the drawing shows, in a diagrammatic perspective view, a barrier according to the invention.

## Detailed Description of the Invention

The barrier as shown in the Figure, for penetrating conduits through a wall opening 1 comprises an enclosure body 3 which can be disposed in the wall opening 1 and comprises a plurality of throughgoing receiving channels, for instance 5, 7, each for enclosing at least one non-illustrated conduit. In the illustrated embodiment, the enclosure body 3 is assembled from plates, for instance 9, 11, of fire protection material, whereby a fire protection effect in all directions is, in a simple manner, obtained for the (non-illustrated) conduits as well as in the surrounding of the enclosure body 3. In the illustrated embodiment, plates having slots, for instance 13, 15, are used, and the enclosure body 3 is simply plugged together from these plates. Thereby, assembly at the application site is easily possible, and the enclosure body can be handled, stored, and shipped in the disassembled state in a space-saving manner.

The illustrated barrier contains furthermore a heat-resistant grid 17 adapted to be fitted into and fill completely the wall opening 1, the mesh openings of the grid forming throughgoing insertion channels, for instance 19, 21, for receiving enclosure bodies 3, and being dimensioned accordingly. In this connection, the dimensions of the insertion channels, for instance 19, 21, are preferably adapted to the dimensions of the enclosure bodies 3 so that the enclosure body 3 can be shifted with little play into an insertion channel. In the Figure, it is indicated that the enclosure body 3 illustrated there is just being shifted into the insertion channel 21.

Due to the small clearance between enclosure body and insertion channel, a good seal between the enclosure body 3 and the grid 17 is made possible, and the best possible combination of space economy and strength is obtained.

The non-needed mesh openings are adapted to be closed by fire-restraining covers, such as 23, 25. In the Figure, the case is illustrated that the width of the wall opening 1 is not exactly a multiple of the width of the mesh openings ; accordingly, the mesh openings which are disposed at the right-hand margin of the grid 17, for instance 27, are narrower than the remaining mesh openings which are disposed more to the left. Accordingly, also the fire-restraining covers 25 for the narrower mesh openings 27 are correspondingly narrower than the covers 23 for the other mesh openings.

In the illustrated embodiment, the receiving channels of the enclosure body 3 can be closed, if not in use, by means of fire-restraining covers, such as 29. Thereby, the fire protection action of the fire protection material need be dimensioned only for the case that the major parts of the cross-sections of the receiving channels, for instance 5, 7, are filled by conduits (not illustrated).

The fire-restraining covers 23, 25, 29 can consist at least partially of a fire protection material which, under influence of a fire, forms an obstacle against the spreading of the fire. Thereby, the barrier action of the covers can be maintained still for a longer period of time in the case of a fire.

The grid 17 has a strength which is sufficient for the reception of a plurality of enclosure bodies 3 with conduits therein. Normally, the strength of the grid 17 will have to be dimensioned for the case that all insertion channels, such as 19, 21, are filled with enclosure bodies 3 with conduits disposed therein. Such a strength can be readily obtained by a corresponding selection of the construction materials used for the grid 17. Moreover, the grid 17 should be designed so that it will be distorted as little as possible under the influence of a fire. Depending upon the material of the grid, this can be aimed at in different ways ; measures which are suitable therefor are known to skilled people. More particularly, an extraordinarily high resistivity and shape consistency can be obtained if the grid 17 consists at least partly of ceramic material. For instance, commercial ceramic construction plates are suitable which consist essentially of calcium silicate. Similar good results can be also obtained if the grid 17 consists at least partly of suitably selected fire-resistant metal.

The useful life of the grid 17 under the influence of a fire can be considerably increased if the grid 17 consists at least partly of fire protection material. In the illustrated embodiment, particularly high fire protection action and a long useful life are due to the fact that the grid consists of metal with a coating of fire protection material. Material of that kind is commercially available ; for instance, particularly suitable is the material which is distributed under the designation "CS 195" by the company 3M Deutschland GmbH, Neuss. In the illustrated embodiment, the grid 17 is assembled from plates, for instance 31, 33, of the described fire resistant and mechanically strong material ; in this manner, the grid 17 can be manufactured conveniently. In the illustrated embodiment, the assembly, moreover, is further facilitated in that slotted plates are used, whereby the grid 17 can be simply plugged together in the slots, for instance 35, 37. This permits a convenient manufacture at the application site, where also the plates can be conveniently cut to the desired size, and makes possible to keep grids 17 in store in a disassembled and thus space-saving condition. For these properties, it is advantageous if the grid 17 is free of a frame, as illustrated. The absence of the frame moreover facilitates the introduction of the grid 17 into the wall opening 1. However, also a grid may be used, of course, which has a peripheral frame.

Normally, it is essential that the wall opening 1 remains completely closed and sealed as long as possible in the case of a fire so that fire and smoke cannot penetrate and chimney-like draft phenomena are avoided. Therefore, any gaps and interstices should normally be filled with fire protection mass 39 (caulk or putty) for instance, particularly in the contact areas between grid 17 and wall opening 1 and furthermore, in the areas where the plates, for instance 31, 33 of the grid 17 and the enclosure body 3 are plugged together, and between the enclosure body 3 and the walls of the insertion channel 21 in which it is received.

As a fire protection material, a material may be advantageously used which will expand under the influence of a fire and in doing so, will convert into a sealing char-like material of low heat conductivity. Preferably, this is combined with evolving water and/or consuming heat by means of an endothermic reaction. Materials of that kind are known. For instance, they may contain particles of alkaline earth metal silicate in an elastomeric base material. Particularly suitable materials of that kind are distributed by the company 3M Deutschland GmbH, Neuss, as Type FS-195AA which predominantly is characterized by its increase in volume (the intumescent action).

As fire protection materials which, under the influence of a fire will consume heat by means of an endothermic chemical reaction and additionally evolves water which has a cooling action are those materials which contain ceramic fibers intermixed with fine particles of aluminum trihydrate. Particularly suitable are the fire protection materials of that kind which are distributed by the company 3M Deutschland, Neuss, as Type E5, which is predominantly characterized by its heat-consuming activity.

The barrier according to the invention can be particularly easily provided in a disassembled condition as a space-saving construction kit. This is very advantageous for storage and shipping.

## Claims

1. A fire-restraining barrier for the penetration of conduits through a wall opening (1) comprising at least one body (3), the body (3) comprising at least one throughgoing receiving channel (5, 7) for receiving at least one conduit and consisting at least partly of a fire protection material which under the influence of a fire forms an obstacle against spreading of the fire ; and fire-restraining covers (29) closing non-needed channels (5, 7) ;
**characterized in that**
the said barrier comprises a fire-resistant grid (17) dimensioned to fill out the wall opening (1), said grid (17) comprising a plurality of insertion channels (19, 21, 23, 25) forming a mesh of openings (27), the dimensions of each insertion channel being adapted to the dimensions of the body (3) so that the body (3) is insertable into an insertion channel (19, 21, 23, 25) with a small clearance, whereby non-needed mesh openings can be closed by fire-restraining covers (23, 25), said grid (17) having a strengh which is sufficient to receive a plurality of the bodies (3) with conduits therein.

2. The barrier according to Claim 1 characterized in that each body (3) comprises a plurality of throughgoing receiving channels (5, 7) arranged in mesh-array.

3. The barrier according to Claim 1 or 2, characterized in that the grid (17) is designed so that it will deform as little as possible under the influence of a fire.

4. A barrier according to one of the preceding claims, characterized in that the grid consists at least partly of ceramic material.

5. A barrier according to one of the preceding claims, characterized in that the grid (17) consists at least partly of metal.

6. A barrier according to one of the preceding claims, characterized in that the grid (17) consists at least partly of a fire protection material.

7. The barrier according to claims 5 and 6, characterized in that the grid (17) consists of metal with a coating of a fire protection material.

8. A barrier according to one of the preceding claims, characterized in that the grid (17) is built together from plates (31, 33).

9. The barrier according to claim 8, characterized in that the grid (17) is adapted to be plugged together from slotted plates (31, 33).

10. A barrier according to one of the preceding claims, characterized in that the grid (17) is free of a frame.

11. A barrier according to one of the preceding claims, characterized in that the body (3) is built together from plates (9, 11) of fire protection material.

12. The barrier according to claim 11, characterized in that the body (3) is adapted to be plugged together from slotted plates (9, 11).

13. A barrier according to one of the preceding claims, characterized in that the unused receiving channels (5, 7) of the body (3) are adapted to be closed by fire-restraining covers (29).

14. A barrier according to one of the preceding claims, characterized in that the fire-restraining cover (29) consists at least partly of a fire protection material which under the influence of a fire forms an obstacle against spreading of the fire.

15. A barrier according to one of the preceding claims, characterized in that the fire protection material consists at least partly of a material which will intumesce under the influence of a fire.

16. A barrier according to one of the preceding claims, characterized in that the fire protection material consists at least partly of a material which will consume heat under the influence of a fire.

17. A barrier according to one of the preceding claims, characterized in that the fire protection material consists at least partly of a material which will evolve an extinguishing agent, particularly water, under the influence of a fire.

18. A barrier according to one of the preceding claims, characterized in that it seals the wall opening (1) completely, possibly with the use of caulk- or putty-like fire protection mass (39).

19. A barrier according to claims 9 and 12, characterized in that the component parts are in a disassembled condition as a space-saving construction kit.

## Ansprüche

1. Brandschutzsperre zum Hindurchführen von Leitungsrohren durch eine Wandöffnung (1) mit mindestens einem Körper (3), der von mindestens einem Aufnahmekanal (5, 7) durchsetzt ist, der zur Aufnahme mindestens einer Leitung dient und mindestens teilweise aus einem Feuerschutzmaterial besteht, das unter dem Einfluß eines Feuers ein Hindernis gegen ein Ausbreiten des Feuers bildet ; ferner mit Feuerschutzdeckeln (29) zum Schließen von nicht benötigten Kanälen (5, 7),
dadurch gekennzeichnet,
daß die Sperre ein feuerfestes Gitter (17) besitzt, das so bemessen ist, daß es die Wandöffnung (1) ausfüllt, und das eine Mehrzahl von Einsetzkanälen (19, 21, 23, 25) besitzt, die ein Maschenwerk von Öffnungen (27) bilden, wobei die Abmessungen jedes Einsatzkanals denen des Körpers (3) so angepaßt sind, daß der Körper mit geringem Spiel in einen Einsatzkanal (19, 21, 23, 35) einsetzbar ist, so daß nicht benötigte Maschenöffnungen mit feuerhemmenden Deckeln (23, 25) verschlossen werden können und daß das Gitter (17) eine für die Aufnahme einer Mehrzahl der Körper (3) mit darin angeordneten Leitungen genügende Festigkeit hat.

2. Sperre nach Anspruch 1, dadurch gekennzeichnet, daß der Körper (3) von einer Mehrzahl von ein Maschenwerk bildenden Aufnahmekanälen (5, 7) durchsetzt ist.

3. Sperre nach Anspruch 1 oder 2, dadurch gekennzeichnet, daß das Gitter (17) so konstruiert ist, daß es sich unter dem Einfluß eines Feuers so wenig wie möglich verformt.

4. Sperre nach einem der vorhergehenden Ansprüche, dadurch gekennzeichnet, daß das Gitter mindestens teilweise aus keramischem Material besteht.

5. Sperre nach einem der vorhergehenden Ansprüche, dadurch gekennzeichnet, daß das Gitter (17) mindestens teilweise aus Metall besteht.

6. Sperre nach einem der vorhergehenden Ansprüche, dadurch gekennzeichnet, daß das Gitter (17) mindestens teilweise aus einem Feuerschutzmaterial besteht.

7. Sperre nach Anspruch 5 und 6, dadurch gekennzeichnet, daß das Gitter (17) aus Metall mit einem Überzug aus einem Feuerschutzmaterial besteht.

8. Sperre nach einem der vorhergehenden Ansprüche, dadurch gekennzeichnet, daß das Gitter (17) aus Platten (31, 33) zusammengebaut ist.

9. Sperre nach Anspruch 8, dadurch gekennzeichnet, daß das Gitter (17) aus geschlitzten Platten (31, 33) zusammensteckbar ist.

10. Sperre nach einem der vorhergehenden Ansprüche, dadurch gekennzeichnet, daß das Gitter (17) rahmenlos ist.

11. Sperre nach einem der vorhergehenden Ansprüche, dadurch gekennzeichnet, daß der Körper (3) aus Platten (9, 11) aus Feuerschutzmaterial zusammengebaut ist.

12. Sperre nach Anspruch 11, dadurch gekennzeichnet, daß der Körper (3) aus geschlitzten Platten (9, 11) zusammensteckbar ist.

13. Sperre nach einem der vorhergehenden Ansprüche, dadurch gekennzeichnet, daß die unbenutzten Aufnahmekanäle (5, 7) des Körpers (3) mit feuerhemmenden Deckeln (29) verschließbar sind.

14. Sperre nach einem der vorhergehenden Ansprüche, dadurch gekennzeichnet, daß der feuerhemmende Deckel (29) mindestens teilweise aus einem Feuerschutzmaterial besteht, das unter dem Einfluß eines Feuers ein Hindernis gegen ein Ausbreiten des Feuers bildet.

15. Sperre nach einem der vorhergehenden Ansprüche, dadurch gekennzeichnet, daß das Feuerschutzmaterial mindestens teilweise aus einem Material besteht, das unter dem Einfluß eines Feuers aufschäumt und feuerlöschend wirkt.

16. Sperre nach einem der vorhergehenden Ansprüche, dadurch gekennzeichnet, daß das Feuerschutzmaterial mindestens teilweise aus einem Material besteht, das unter dem Einfluß eines Feuers Wärme verbraucht.

17. Sperre nach einem der vorhergehenden Ansprüche, dadurch gekennzeichnet, daß das Feuerschutzmaterial mindestens teilweise aus einem Material besteht, das unter dem Einfluß eines Feuers ein feuerlöschendes Mittel, insbesondere Wasser, entwickelt.

18. Sperre nach einem der vorhergehenden Ansprüche, dadurch gekennzeichnet, daß sie die Wandöffnung (1) gegebenenfalls unter Verwendung einer kittartigen Feuerschutzmasse (39) vollständig abdichtet.

19. Sperre nach Anspruch 9 und 12, dadurch gekennziechnet, daß sich die Bestandteile in auseinandernehmbaren Zustand in einem raumsparenden Baukasten befinden.

## Revendications

1. Barrière retenant le feu et destinée à la pénétration de conduits à travers une ouverture de paroi (1), comprenant au moins un corps (3), ce corps (3) comportant au moins un canal récepteur traversant (5, 7) destiné à recevoir au moins un conduit et formé au moins partiellement d'un matériau de protection contre l'incendie, qui, sous l'influence d'un feu, formera un obstacle contre l'étalement de l'incendie, ainsi que des couvercles retenant le feu (29) fermant les canaux (5, 7) qui ne sont pas utilisés, caractérisée en ce que cette barrière comprend une grille résistant au feu (17) dimensionnée de manière à remplir l'ouverture de paroi (1), cette grille (17) comportant une série de canaux d'introduction (19, 21, 23, 25) formant un réseau d'ouvertures (27), les dimensions de chaque canal d'introduction étant adaptées aux dimensions du corps (3) de manière que ce corps (3) puisse être introduit dans un canal d'introduction (19, 21, 23, 25) avec un faible jeu, les ouvertures du réseau, qui ne sont pas nécessaires, pouvant être fermées par des couvercles retenant le feu (23, 25), la grille (17) présentant une résistance ou solidité qui est suffisante pour qu'elle reçoive une série des corps (3) comportant intérieurement des conduits.

2. Barrière suivant la revendication 1, caractérisée en ce que chaque corps (3) comporte une série de canaux récepteurs traversants (5, 7) agencés sous forme d'un réseau à mailles.

3. Barrière suivant la revendication 1 ou la revendication 2, caractérisée en ce que la grille (17) est conçue de manière qu'elle se déforme aussi peu que possible sous l'influence d'un incendie.

4. Barrière suivant l'une quelconque des revendications précédentes, caractérisée en ce que la grille consiste au moins partiellement en un matériau céramique.

5. Barrière suivant l'une quelconque des revendications précédentes, caractérisée en ce que la grille (17) consiste au moins partiellement en un métal.

6. Barrière suivant l'une quelconque des revendications précédentes, caractérisée en ce que la grille (17) consiste au moins partiellement en un matériau de protection contre l'incendie.

7. Barrière suivant les revendications 5 et 6, caractérisée en ce que la grille (17) consiste en un métal comportant un revêtement d'un matériau de protection contre l'incendie.

8. Barrière suivant l'une quelconque des revendications précédentes, caractérisée en ce que la grille (17) est formée au départ de plaques (31, 33).

9. Barrière suivant la revendication 8, caractérisée en ce que la grille (17) est adaptée pour être assemblée au départ de plaques (31, 33) présentant des fentes.

10. Barrière suivant l'une quelconque des revendications précédentes, caractérisée en ce que la grille (17) ne comporte pas d'encadrement.

11. Barrière suivant l'une quelconque des revendications précédentes, caractérisée en ce que le corps (3) est formé au départ de plaques (9, 11) d'un matériau de protection contre l'incendie.

12. Barrière suivant la revendication 11, caractérisée en ce que le corps (3) est destiné à être assemblé au départ de plaques (9, 11) présentant des fentes.

13. Barrière suivant l'une quelconque des revendications précédentes, caractérisée en ce que les canaux récepteurs non utilisés (5, 7) du corps (3) sont adaptés pour être fermés par des couvercles retenant le feu (29).

14. Barrière suivant l'une quelconque des revendications précédentes, caractérisée en ce que le couvercle retenant le feu (29) consiste au moins partiellement en un matériau de protection contre l'incendie, qui, sous l'influence d'un incendie, forme un obstacle à l'étalement du feu.

15. Barrière suivant l'une quelconque des revendications précédentes, caractérisée en ce que le matériau de protection contre l'incendie consiste au moins partiellement en un matériau qui gonflera sous l'influence d'un feu.

16. Barrière suivant l'une quelconque des revendications précédentes, caractérisée en ce que le matériau de protection contre l'incendie consiste au moins partiellement en un matériau qui consommera de la chaleur sous l'influence d'un feu.

17. Barrière suivant l'une quelconque des revendications précédentes, caractérisée en ce que la matière de protection contre l'incendie consiste au moins partiellement en un matériau qui dégagera un agent d'extinction, en particulier de l'eau, sous l'influence d'un feu.

18. Barrière suivant l'une quelconque des revendications précédentes, caractérisée en ce qu'elle obture complètement l'ouverture de paroi (1), éventuellement avec utilisation d'une masse de protection contre le feu (39) du type agent de calfeutrage ou mastic.

19. Barrière suivant les revendications 9 et 12, caractérisée en ce que les parties constitutives se trouvent dans un état désassemblé sous forme d'une trousse de construction économisant de l'espace.